# FASCICULE DE BREVET EUROPEEN

(11) **EP 1 219 336 B1**
(45) Date de publication et mention de la délivrance du brevet: **16.02.2011**
(21) Numéro de dépôt: 01490053.4
(22) Date de dépôt: 14.12.2001
(51) Int. Cl.: B01D 53/00, B01D 46/00, C04B 7/02

(54) **Procédé et dispositif d'élimentation des éléments volatils néfastes, notamment chlorures et/ou sulfates, contenus dans un courant de fumées**
Verfahren und Vorrichtung zur Entfernung von schädlichen flüchtigen Verbindungen, insbesondere Sulfaten und/oder Chloriden, aus einem Rauchgasstrom
Method and apparatus for removing harmful volatile elements, especially sulfates and/or chlorides, from a flue gas

(30) Priorité: 29.12.2000 FR 0017292
(43) Date de publication de la demande: 03.07.2002
(73) Titulaire: Fives FCB, 59650 Villeneuve d'Ascq (FR)
(72) Inventeur: Jorget, Serge, 59700 Marcq-en-Baroeul (FR); Duda, Jean-Pierre, 62880 Estevelles (FR)
(74) Mandataire: Duthoit, Michel Georges André

(56) Documents cités:
- EP-A- 0 808 809
- DD-A- 258 798
- US-A- 4 465 520
- US-A- 5 704 780

## Description

L'invention concerne un procédé et un dispositif d'élimination des éléments volatils néfastes, notamment chlorures et/ou sulfates, contenus dans un courant de fumées chargées de particules, ainsi qu'une utilisation dudit dispositif dans une installation de production de clinker de ciment, notamment Portland.

US-A-4 465 520 décrit un tel procédé et un tel dispositif.

Toutefois, bien que plus particulièrement prévus pour de telles applications, le procédé et le dispositif d'élimination selon l'invention pourront également être utilisés dans tous autres domaines dans lesquels on souhaite effectuer un dégazage de fumées chargées de particules.

Actuellement, dans le domaine de la production du ciment, un procédé de fabrication très répandu consiste à réaliser les étapes suivantes :
- broyage fin du mélange de matières premières nécessaires,
- préchauffage de la farine ainsi obtenue dans un échangeur à cyclones jusqu'à une température comprise entre 800 °C et 900 °C,
- cuisson de la matière préchauffée dans un four tubulaire rotatif qui porte ladite matière à une température supérieure à 1.350 °C.

Le matériau qui sort du four est appelé clinker. Celui-ci est ensuite refroidi et broyé pour obtenir le ciment.

On conçoit que le procédé décrit plus haut est très consommateur en énergie et il peut être avantageux de minimiser les apports calorifiques en fournissant les fumées dégagées dans le four à l'échangeur à cyclones pour assurer le préchauffage.

Cela étant, il peut arriver que les matières premières contiennent des composés minéraux qui sont volatils à haute température, notamment des chlorures et/ou sulfates. Dans les appareils où règne une température élevée, il s'établit alors un cycle : lesdits composés sont volatilisés dans la zone la plus chaude du four, près de la sortie du clinker, et se condensent en majeure partie entre 700 °C et 950 °C, c'est-à-dire dans la partie basse de l'échangeur à cyclones.

En conséquence, lesdits composés ne peuvent sortir ni avec le clinker chaud, car ils sont alors à l'état volatil, ni avec les fumées finales partiellement refroidies, car elles sont alors condensées et ils s'accumulent pour atteindre des concentrations très importantes dans la matière et dans les gaz qui circulent à l'intérieur des appareils de cuisson.

Au niveau des points de condensation, ils peuvent ainsi entraîner un collage des matières pulvérulentes contre les parois desdits appareils et provoquer des obstructions dommageables au bon déroulement de la production.

Une méthode connue pour éliminer ces éléments néfastes consiste à pratiquer une purge à l'endroit où ceux-ci sont sous forme gazeuse, c'est-à-dire dans la partie la plus basse de l'échangeur dès que les fumées du four ont quitté ce dernier. Cette purge est généralement appelée by-pass des fumées du four. La proportion de fumées que l'on doit purger dépend de la quantité de composés volatils ; elle peut dépasser 50 % dans certains cas.

Pour cela, on aspire une partie des fumées dans lesquelles on injecte de l'air frais. Le refroidissement très rapide des gaz causé par le mélange avec l'air frais provoque la condensation des éléments volatils, d'une part sous forme de grains très fins, et d'autre part, sous forme de dépôts à la surface des grains de matières en suspension qui ont été aspirés avec les fumées. On obtient ainsi des poussières de by-pass constituées d'un mélange des matières premières en cours de transformation et desdits éléments néfastes condensés. Les gaz poussiéreux sont alors filtrés pour retenir les poussières que contiennent lesdits éléments néfastes.

Les poussières de by-pass représentent cependant une perte de production puisqu'elles contiennent une part de matières premières. A titre d'exemple, un taux de by-pass de 10 % des fumées peut entraîner la perte de 1 à plusieurs % de production.

En outre, les poussières de by-pass représentent un coût pour l'environnement parce que la plupart du temps, on ne dispose pas d'un moyen de traitement adéquat et on doit s'en débarrasser. Elles représentent ainsi un supplément de consommation calorifique puisqu'elles ont reçu l'énergie nécessaire à la décomposition des carbonates contenus dans les matières premières. La diminution de leur quantité représente donc un enjeu économique notable.

Une solution pour diminuer la quantité de matières perdues consiste à séparer les poussières en deux fractions, l'une grossière et pauvre en éléments néfastes, que l'on peut réintroduire dans le circuit de fabrication du clinker, et l'autre fine et riche en éléments néfastes que l'on élimine ou que l'on valorise séparément.

Jusqu'à maintenant, cette solution n'a été mise en oeuvre qu'avec de faibles taux de prélèvement des fumées, inférieurs à 5 %.

Cependant, comme déjà dit, le taux de prélèvement des fumées peut être parfois très supérieur à 5 % et il n'a jusqu'à présent été proposé aucune solution de recyclage dans ce cas.

Les difficultés à résoudre sont en effet nombreuses. Plus le débit de fumées extraites est faible, plus leur refroidissement est intense et plus la proportion dans les poussières de by-pass de grains fins constitués de condensats est importante. Par contre, en cas de taux de prélèvement importants , la répartition des éléments néfastes au niveau des poussières est plus aléatoire. En outre, dans un tel cas, il ne serait pas économique d'utiliser une solution qui provoquerait un rassemblement des poussières en groupe de granulométrie hétérogène tel que par exemple des échangeurs à cyclones.

Le but de l'invention est de proposer un procédé et un dispositif d'élimination des éléments volatils néfastes, notamment chlorures et/ou sulfates, contenus dans un courant de fumées chargées de particules, ainsi que l'utilisation dudit dispositif dans une installation de production de clinker de ciment, notamment Portland, qui pallient les inconvénients précités et permettent de recycler une partie au moins des particules pauvres en éléments néfastes prélevés pour l'élimination des éléments volatils, dans le cas de procédés présentant un taux de prélèvement des fumées élevé.

D'autres buts et avantages de l'invention apparaîtront au cours de la description qui va suivre, qui n'est donnée qu'à titre indicatif et qui n'a pas pour but de la limiter.

L'invention concerne tout d'abord un procédé d'élimination des éléments volatils néfastes, notamment chlorures et/ou sulfates, contenus dans un courant de fumées chargées de particules, procédé dans lequel on prélève une fraction donnée d'au moins 5 % desdites fumées, dites fumées by-passées, on fait condenser les éléments néfastes des fumées by-passées au moins au niveau de leurs particules, selon une distribution fonction de ladite fraction prélevée, et on filtre lesdites particules pour isoler lesdits éléments néfastes, caractérisé par le fait que, lors de la filtration, on sépare lesdites particules en au moins deux fractions, l'une de granulométrie fine, et l'autre de granulométrie grossière, en employant une sélectivité de séparation adaptée à ladite distribution des éléments néfastes afin que ladite fraction de granulométrie grossière soit pauvre en éléments néfastes et ladite fraction de granulométrie fine soit riche en éléments néfastes.

L'invention concerne également un dispositif d'élimination des éléments volatils néfastes, notamment chlorures et/ou sulfates, contenus dans un courant de fumées chargées de particules, ledit dispositif comprenant des moyens pour prélever une fraction donnée d'au moins 5 % desdites fumées, dites fumées by-passées, des moyens pour faire condenser les éléments néfastes des fumées by-passées au moins au niveau de leurs particules, selon une distribution fonction de ladite fraction prélevée, et des moyens de filtration desdites particules pour isoler lesdits éléments néfastes, caractérisé par le fait que lesdits moyens de filtration comprennent des moyens de séparation desdites particules en au moins deux fractions, l'une de granulométrie fine et l'autre de granulométrie grossière, lesdits moyens de séparation présentant une sélectivité adaptée à ladite distribution des éléments néfastes afin que ladite fraction de granulométrie grossière soit pauvre en éléments néfastes et ladite fraction de granulométrie fine soit riche en éléments néfastes.

L'invention concerne encore l'utilisation du dispositif décrit plus haut dans une installation de production de clinker de ciment, notamment Portland.

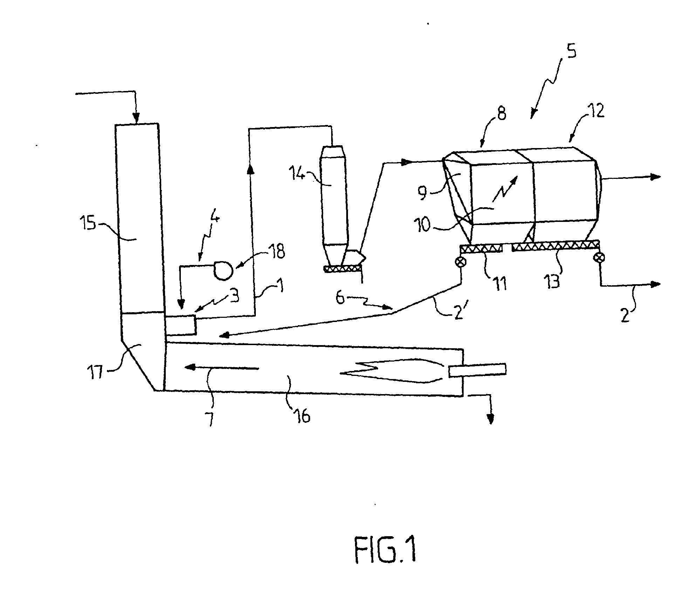

L'invention sera mieux comprise à la lecture de la description suivante, accompagnée de la figure 1 en annexe qui illustre de manière schématique un exemple d'installation de production de clinker de ciment utilisant le dispositif conforme à l'invention.

L'invention concerne tout d'abord un procédé d'élimination des éléments volatils néfastes, notamment chlorures et/ou sulfates contenus dans un courant de fumées chargées de particules.

Comme illustré à la figure 1, selon ledit procédé, on prélève une fraction donnée 1 d'au moins 5 % desdites fumées. Ladite fraction forme un flux de fumées, dites fumées by-passées dans lequel lesdits éléments néfastes sont présents sous forme gazeuse, et on fait condenser ceux-ci, notamment par refroidissement par air. Lesdits éléments néfastes se transforment alors en grains très fins et/ou se déposent au niveau desdites particules, selon une distribution fonction de ladite fraction prélevée. On filtre ensuite lesdites particules pour isoler lesdits éléments néfastes.

Il est utile de signaler à ce niveau que par le mot filtrage, on entend une opération consistant à purifier un liquide ou un gaz, et notamment à retenir les matières auxquelles il se trouve mélangé ou à-travers lesquelles on veut le faire passer. Signalons en outre que par le mot séparation, on entend une opération consistant à séparer des éléments d'un mélange hétérogène présentant, par exemple, des particules de tailles différentes.

Selon l'invention, lors de la filtration, on sépare lesdites particules en au moins deux fractions, l'une de granulométrie fine 2 et l'autre de granulométrie grossière 2' en employant une sélectivité de séparation adaptée à ladite distribution des éléments néfastes afin que ladite fraction de granulométrie grossière soit pauvre en éléments néfastes et ladite fraction de granulométrie fine soit riche en éléments néfastes. On peut ainsi recirculer la fraction de granulométrie grossière vers le courant de fumées. Dans ce qui précède, les termes « pauvre » / « riche » et « grossière » / « fine » n'ont qu'une signification relative l'un par rapport à l'autre.

On dispose de la sorte, en choisissant une sélectivité de séparation permettant de traiter des courants de particules dont la répartition granulométrique est relativement étalée, d'une solution permettant un recyclage d'une partie des particules prélevées, ceci même en cas d'un prélèvement d'une forte fraction des fumées.

La sélectivité de filtration désirée est obtenue, par exemple, en réalisant une première séparation desdites particules à l'aide d'un élargissement du flux de fumées by-passées, entraînant une décantation desdites particules en raison du brusque ralentissement causé par l'élargissement du flux, et/ou par soumission desdites particules à une précipitation électrostatique. Ladite fraction grossière 2' est alors constituée des particules piégées lors de cette première étape de filtration.

On pourra également effectuer une seconde filtration des particules non piégées lors de la première filtration, ladite fraction fine 2 étant constituée des particules piégées lors de cette seconde étape de filtration.

En complément du refroidissement préalable par air des fumées by-passées pour la condensation des éléments volatils néfastes, on pourra refroidir une deuxième fois lesdites fumées by-passées, avant filtration, par pulvérisation d'un liquide, notamment de l'eau. Les températures des fumées by-passées descendent ainsi d'une température supérieure à 1.000 °C lorsqu'elles sont prélevées à, par exemple, 400 à 600 °C avant filtration, voire 120 à 250 °C en cas de second refroidissement.

Cela étant, on pourra prélever, notamment, de 5 à 55 % des fumées. A titre d'exemple, pour un prélèvement d'environ 15 % des fumées d'un four de production de clinker de ciment, seulement 60 % du chlore se situera dans les fractions fines inférieures à 20 µm, qui regroupent 60 % du poids des poussières.

Avec ce type de distribution relativement étalé, on comprend qu'il faut limiter la fraction grossière, par exemple, à 10 à 40 % en poids des particules filtrées et que, compte tenu de telles fractions, on ne peut utiliser n'importe quel appareil de séparation dont la sélectivité ne serait pas adaptée.

On pourra par exemple isoler une fraction grossière représentant 25 à 30 % en poids des particules filtrées pour limiter le taux d'éléments néfastes dans celles-ci à environ 10 à 15 % par rapport à leur teneur initiale.

L'invention concerne également un dispositif d'élimination des éléments volatils néfastes, notamment chlorures et/ou sulfates, contenus dans un courant de fumées chargées de particules.

Un tel dispositif pourra être utilisé, notamment, pour la mise en oeuvre du procédé décrit plus haut.

Comme illustré à la figure 1, ledit dispositif comprend des moyens 3 pour prélever une fraction 1 donnée d'au moins 5 % desdites fumées, selon un flux de fumées, dites fumées by-passées, des moyens 4 pour faire condenser les éléments néfastes des fumées by-passées au moins au niveau de leurs particules, selon une distribution fonction de ladite fraction prélevée, et des moyens 5 de filtration desdites particules pour isoler lesdits éléments néfastes.

Selon l'invention, lesdits moyens de filtration 5 comprennent des moyens de séparation desdites particules en au moins deux fractions, l'une de granulométrie fine et l'autre de granulométrie grossière, lesdits moyens de séparation présentant une sélectivité adaptée à ladite distribution des éléments néfastes afin que ladite fraction de granulométrie grossière soit pauvre en éléments néfastes et ladite fraction de granulométrie fine soit riche en éléments néfastes. En outre, ledit dispositif pourra comprendre des moyens 6 pour recirculer la fraction de granulométrie grossière vers le courant de fumées 7.

Lesdits moyens de séparation comprennent, par exemple, un premier filtre 8, apte à accueillir l'ensemble des particules des fumées by-passées, ledit premier filtre 8 étant muni de moyens pour élargir le flux de fumées by-passées et/ou de moyens pour les soumettre à une précipitation électrostatique, aptes à isoler ladite fraction grossière 2' et à la diriger vers lesdits moyens pour recirculer 6.

Ledit premier filtre 8 est constitué, notamment, d'un filtre électrostatique. Ce dernier est constitué, notamment, d'un pavillon d'entrée 9, destiné à répartir et à ralentir les fumées, et d'une enceinte de traitement 10, dans laquelle débouche ledit pavillon d'entrée 9. Ladite enceinte de traitement 10 permet la création d'un champ électrostatique dans lequel on fait circuler les fumées. Ledit premier filtre 8 est également muni de moyens d'extraction 11 des particules piégées, situées sous ledit pavillon d'entrée 9 et/ou l'enceinte de traitement électrostatique 10 pour recueillir les matières décantées dans ledit pavillon d'entrée et/ou tout ou partie des matières captées par le champ électrostatique. Lesdits moyens d'extraction 11 de la fraction de granulométrie grossière 2' débouchent sur lesdits moyens pour recirculer 6.

Lesdits moyens de séparation pourront en outre comprendre un second filtre 12, apte à accueillir les particules non piégées dans ledit premier filtre 8 et à isoler ladite fraction de granulométrie fine 2. Ledit second filtre 12 est, notamment, du type électrostatique ou à éléments textiles. Il est muni de moyens d'extraction 13 de ladite fraction de granulométrie fine 2 qui permettent une évacuation de celle-ci pour être mise en décharge ou valorisée séparément.

Lesdits moyens d'extraction 11, 13 de la fraction grossière 2' ou de la fraction fine 2 sont constitués, notamment, de convoyeurs à vis, ou à chaînes ou tous autres systèmes adéquats.

Lesdits moyens 4 pour faire condenser les éléments néfastes pourront fonctionner, notamment, par apport d'air en provenance d'une source 18 au niveau des moyens pour prélever les fumées 3.

Une tour de conditionnement 15, fonctionnant notamment par pulvérisations d'eau, pourra également être prévue en aval desdits moyens pour prélever 3 et en amont desdits moyens de filtration 5 le long de la trajectoire des fumées by-passées pour apporter un complément de refroidissement.

Selon l'invention, on pourra utiliser un dispositif décrit plus haut dans une installation de production de clinker de ciment, notamment Portland.

L'invention concerne ainsi par exemple un procédé dans lequel on réalise un traitement thermique d'un matériau préalablement broyé en effectuant une première étape de préchauffage et une seconde étape de chauffage dégageant des fumées chargées de particules et dans lequel on utilise les fumées dégagées lors de la seconde étape pour réaliser un apport calorifique lors de la première étape, les éléments volatils néfastes contenus dans lesdites fumées étant traités selon le procédé d'élimination décrit plus haut.

Plus précisément, les fumées by-passées pourront être prélevées en partie basse du flux de fumées employé pour l'apport calorifique.

L'installation de ciment correspondante comprend des moyens pour réaliser un traitement thermique d'un matériau préalablement broyé constitué de moyens de préchauffage, notamment un échangeur à cyclones 15, et de moyens de chauffage, notamment un four tubulaire rotatif 16, entraînant le dégagement de fumées contenant des particules. Ladite installation comprend encore des moyens pour utiliser lesdites fumées dégagées par les moyens de chauffage pour réaliser un apport calorifique au niveau des moyens de préchauffage, ainsi qu'un dispositif d'élimination des éléments volatils néfastes présents dans les fumées, tels que décrits plus haut.

Les moyens pour prélever 3 dudit dispositif sont situés, notamment, à la base 17 des moyens pour utiliser l'énergie calorifique des fumées, entre l'échangeur à cyclones 15 et le four 16.

Naturellement, d'autres modes de mise en oeuvre, à la portée de l'homme de l'art, auraient pu être envisagés sans pour autant sortir du cadre de l'invention, qui sont décrits dans les revendications suivantes.

## Revendications

1. Procédé d'élimination des éléments volatils néfastes, notamment chlorures et/ou sulfates, contenus dans un courant de fumées chargées de particules, procédé dans lequel on prélève une fraction donnée d'au moins 5 % desdites fumées, dites fumées by-passées, on fait condenser les éléments néfastes des fumées by-passées au moins au niveau de leurs particules, selon une distribution fonction de ladite fraction prélevée, et on filtre lesdites particules pour isoler lesdits éléments néfastes, **caractérisé par le fait que**, lors de la filtration, on sépare lesdites particules en au moins deux fractions, l'une de granulométrie fine et l'autre de granulométrie grossière, en employant une sélectivité de séparation adaptée à ladite distribution des éléments néfastes afin que ladite fraction de granulométrie grossière soit pauvre en éléments néfastes et ladite fraction de granulométrie fine soit riche en éléments néfastes, dans lequel les fumées by-passées forment un flux et on réalise une première filtration desdites particules en élargissant ledit flux et en les soumettant à une précipitation électrostatique, ladite fraction grossière étant constituée des particules piégées lors de ladite première filtration.

2. Procédé selon la revendication 1, dans lequel on recircule vers le courant de fumées ladite fonction grossière constituée des particules piégées lors de la première filtration.

3. Procédé selon la revendication 1 ou 2, dans lequel on effectue une seconde filtration des particules non piégées lors de ladite première filtration, ladite fraction fine étant constituée des particules piégées lors de ladite seconde filtration,

4. Procédé selon la revendication 1, dans lequel ladite fraction grossière représente 10 à 40 % en poids des particules filtrées.

5. Procédé selon la revendication 1, dans lequel on refroidit lesdites fumées by-passées en deux étapes.

6. Dispositif d'élimination des éléments volatils néfastes, notamment chlorures et/ou sulfates, contenus dans un courant de fumées chargées de particules, ledit dispositif comprenant des moyens (3) pour prélever une fraction donnée d'au moins 5 % desdites fumées, selon un flux de fumées, dites fumées by-passées, des moyens (4) pour faire condenser les éléments néfastes des fumées by-passées au moins au niveau de leurs particules, selon une distribution fonction de ladite fraction prélevée, et des moyens de filtration (5) pour isoler lesdits éléments néfastes, **caractérisé par le fait que** lesdits moyens de filtration (5) comprennent des moyens de séparation desdites particules en au moins deux fractions, l'une de granulométrie fine et l'autre de granulométrie grossière, lesdits moyens de séparation présentant une sélectivité adaptée à ladite distribution des éléments néfastes afin que ladite fraction de granulométrie grossière soit pauvre en éléments néfastes et ladite fraction de granulométrie fine soit riche en éléments néfastes, et dans lequel lesdits moyens de séparation comprennent un premier filtre (8), apte à accueillir l'ensemble des particules des fumées by-passées, ledit premier filtre (8) étant muni de moyens pour élargir le flux de fumées by-passées et de moyens pour les soumettre à une précipitation électrostatique, aptes à isoler ladite fraction grossière.

7. Dispositif selon la revendication 6, comprenant des moyens (6) pour recirculer la fraction de granulométrie grossière vers le courant de fumées.

8. Dispositif selon la revendication 6 ou 7, dans lequel ledit premier filtre (8) est un filtre électrostatique.

9. Dispositif selon la revendication 6 ou 7, dans lequel lesdits moyens de séparation comprennent en outre un second filtre (12), apte à accueillir les particules non piégées dans ledit premier filtre (8) et à isoler ladite fraction de granulométrie fine.

10. Utilisation du dispositif selon l'une quelconque des revendications 6 à 9, dans une installation de production de clinker de ciment, notamment Portland.

## Claims

1. A method for eliminating harmful volatile elements, in particular chlorides and/or sulphates, contained in a stream of particle-laden fumes, a method wherein a given fraction of at least 5% of said fumes, so-called by-passed fumes is extracted, the harmful elements of the by-passed fumes are condensed at least at the level of their particles, according to a distribution related to said extracted fraction, and said particles are filtered for isolating said harmful elements, **characterised in that** at the time of filtering, said particles are separated into at least two fractions, the one with a fine grain size and the other having a coarse grain size, by using a separation selectivity adapted to said distribution of the harmful elements so that said fraction having a coarse grain size is poor in harmful elements and said fraction having a fine grain size is rich in harmful elements, wherein the by-passed fumes forms a flux and said particles are filtered a first time by widening said flux and by subjecting them to electrostatic precipitation, said coarse fraction consisting of particles trapped at the time of said first filtering.

2. A method according to claim 1, wherein said coarse function consisting of the particles trapped at the time of the first filtering is recirculated towards the stream of fumes,

3. A method according to claim 1 or 2, wherein the particles which have not been trapped at the time of said first filtering are filtered for a second time, said fine fraction consisting of the particles trapped at the time of said second filtering.

4. A method according to claim 1, wherein said coarse fraction represents 10 to 40% in weight of the filtered particles.

5. A method according to claim 1, wherein said by-passed fumes are cooled in two steps.

6. A device for eliminating harmful volatile elements, in particular chlorides and/or sulphates, contained in a stream of particle-laden fumes, said device including means (3) for extracting a given fraction of at least 5% of said fumes, along a flux of fumes, so-called by-passed fumes, means (4) for condensing the harmful elements of the by-passed fumes at least at the level of their particles, according to a distribution related to said extracted fraction, and filtering means (5) for isolating said harmful elements, **characterised in that** said filtering means (5) includes means for separating said particles into at least two fractions, the one with a fine grain size and the other one having a coarse grain size, wherein said separating means have a selectivity adapted to said distribution of the harmful elements so that said fraction having a coarse grain size is poor in harmful elements and said fraction having a fine grain size is rich in harmful elements, and wherein said separating means comprise a first filter (8),capable of accommodating all the particles of the by-passed fumes, said first filter (8) being fitted with means for widening the flux of by-passed fumes and with means for subjecting them to electrostatic precipitation, capable of isolating said coarse fraction.

7. A device according to claim 6, including means (6) for recirculating the fraction having a coarse grain size towards the stream of fumes.

8. A device according to claim 8 or 7, where said first filter (8) is an electrostatic filter.

9. A device according to claim 6 or 7, wherein said separating means moreover comprise a second filter (12), capable of accommodating the particles which have not been in said first filter (8) and of isolating said fraction having a fine grain size.

10. A use of the device according to any of the claims 6 to 9, in a plant for producing cement clinker, in particular Portland.

## Patentansprüche

1. Verfahren zum Entfernen von schädlichen, flüchtigen Elementen, nämlich Chloriden und/oder Sulfaten, die in einem mit Partikeln beladenen Rauchstrom enthalten sind, in welchem Verfahren eine gegebene Fraktion von wenigstens 5 % des besagten Rauches, die als Nebenrauch bezeichnet wird, entnommen wird, die schädlichen Elemente des Nebenrauches wenigstens im Bereich ihrer Partikeln nach einer von der besagten entnommenen Fraktion abhängigen Verteilung kondensiert werden, und die besagten Partikeln gefiltert werden, um die besagten schädlichen Elemente zu trennen, **dadurch gekennzeichnet, dass** die besagten Partikeln beim Filtrieren in wenigstens zwei Fraktionen, eine mit Feinkörngröße und die andere mit Grobkörngröße, getrennt werden, indem eine der bestagten Verteilung der schädlichen Elemente angepasste Trennselektivität verwendet wird, so dass die besagte Fraktion mit Grobkörngröße arm an schädlichen Elementen und die besagte Fraktion mit Feinkörngröße reich an schädlichen Elementen ist, bei dem der Nebenrauch einen Fluss bildet und eine erste Filtrierung der besagten Partikeln durchgeführt wird, indem der besagte Fluss aufgeweitet wird, und diese einer elektrostatischen Ausscheidung ausgesetzt werden, wobei die besagte Grobfraktion aus während der besagten ersten Filtrierung abgefangenen Partikeln besteht.

2. Verfahren nach Anspruch 1, bei dem die besagte Grobfraktion, die aus den bei der ersten Filtrierung abgefangenen Partikeln besteht, aufneu zu dem Rauchstrom zirkuliert wird.

3. Verfahren nach Anspruch 1 oder 2, bei dem eine zweite Filtrierung der bei der besagten ersten Filtrierung nicht abgefangenen Partikeln durchgeführt wird, wobei die besagte Feinfraktion aus den bei der besagten zweiten Filtrierung abgefangenen Partikeln besteht.

4. Verfahren nach Anspruch 1, bei dem die besagte Grobfraktion zwischen 10 und 40 Gew.% der gefilterten Partikeln darstellt.

5. Verfahren nach Anspruch 1, bei dem der besagte in zwei Stufen gekühlt wird.

6. Vorrichtung zum Entfernen von schädlichen, flüchtigen Elementen, nämlich Chloriden und/oder Sulfaten, die in einem mit Partikeln beladenen Rauchstrom enthalten sind, wobei die besagte Vorrichtung Mittel (3), um eine gegebene Fraktion von wenigstens 5 % des besagten Rauches nach einem Rauchfluss, der als Nebenrauch bezeichnet wird, zu entnehmen, Mittel (4), um die schädlichen Elemente des Nebenrauches wenigstens im Bereich ihrer Partikeln nach einer von der besagten entnommenen Fraktion abhängigen Verteilung zu kondensieren, und Filtriermittel (5), um die besagten schädlichen Elemente zu trennen, umfasst, **dadurch gekennzeichnet, dass** die Filtriermittel (5) Mittel umfassen, um die besagten Partikeln in wenigstens zwei Fraktionen, eine mit Feinkörngröße und die andere mit Grobkörngröße, zu trennen, wobei die besagten Trennmittel eine der bestagten Verteilung der schädlichen Elemente angepasste Trennselektivität aufweisen, so dass die besagte Fraktion mit Grobkörngröße arm an schädlichen Elementen und die besagte Fraktion mit Feinkörngröße reich an schädlichen Elementen ist, und bei der die besagten Trennmittel ein erstes Filter (8) umfasst, das geeignet ist, um sämtliche Partikeln des Nebenrauches aufzunehmen, wobei das erste Filter (8) mit Mitteln, um den Nebenrauchfluss aufzuweiten und -Mitteln, um diese einer elektrostatischen Ausscheidung auszusetzen, die geeignet sind, die besagte Grobfraktion zu trennen, versehen ist.

7. Vorrichtung nach Anspruch 6, umfassend Mittel (6), um die besagte Fraktion mit Grobkörngröße aufneu zu dem Rauchstrom zu zirkulieren.

8. Vorrichtung nach Anspruch 6 oder 7, bei der das besagte erste Filter (8) ein elektrostatisches Filter ist.

9. Vorrichtung nach Anspruch 6 oder 7, bei der die besagten Trennmittel außerdem ein zweites Filter (12) umfassen, das geeignet ist, die im besagten ersten Filter (8) nicht abgefangenen Partikeln aufzunehmen und die besagte Fraktion mit Feinkörngröße zu trennen.

10. Verwendung der Vorrichtung nach irgendeinem der Ansprüche 6 bis 9 in einer Anlage zur Produktion von Zementklinkern, nämlich Portland.
